Europäisches Patentamt

European Patent Office

Office européen des brevets

(19)

(11) Veröffentlichungsnummer: **0 340 316 B1**

(12) **EUROPÄISCHE PATENTSCHRIFT**

(45) Veröffentlichungstag der Patentschrift: **10.06.92**

(51) Int. Cl.⁵: **G01L 25/00**, G01M 9/00

(21) Anmeldenummer: **88106982.7**

(22) Anmeldetag: **30.04.88**

(54) **Kalibriereinrichtung für eine interne Windkanalwaage.**

(43) Veröffentlichungstag der Anmeldung:
**08.11.89 Patentblatt 89/45**

(45) Bekanntmachung des Hinweises auf die
Patenterteilung:
**10.06.92 Patentblatt 92/24**

(84) Benannte Vertragsstaaten:
**DE FR GB IT NL**

(56) Entgegenhaltungen:
**DE-A- 1 698 129**

(73) Patentinhaber: **CARL SCHENCK AG**
**Landwehrstrasse 55 Postfach 40 18**
**W-6100 Darmstadt(DE)**

(72) Erfinder: **Ewald, Bernd, Prof., Dipl.-Ing.**
**Brunnenstrasse 20**
**W-6105 Ober-Ramstadt(DE)**
Erfinder: **Giesecke, Peter, Prof., Dipl.-Ing.**
**Spessartstrasse 120**
**W-6200 Wiesbaden-Nordenstadt(DE)**
Erfinder: **Graewe, Eberhard**
**Fritz-Harrie-Strasse 2**
**W-2807 Achim(DE)**

(74) Vertreter: **Brandt, Ernst-Ulrich**
**Fa. Carl Schenck AG Patentabteilung Land-**
**wehrstrasse 55 Postfach 40 18**
**W-6100 Darmstadt 1(DE)**

## Beschreibung

Die Erfindung betrifft eine Kalibriereinrichtung für eine interne Windkanalwaage, die einen Befestigungsabschnitt zur Verbindung mit einem Traggestell des Windkanals, einen Aufnahmeabschnitt zur Anbringung eines Prüfmodells und einen Meßabschnitt aufweist, an dem Kraftmeßelemente für eine Kraft- und Momentenmessung angebracht sind, mit einer an der Windkanalwaage angreifenden Belastungseinrichtung.

Eine solche Kalibriereinrichtung ist beispielsweise aus der DE-A-1 698 192 bekannt.

Windkanalwaagen sind Mehrkomponenten-Meßeinrichtungen, mit denen Kräfte in den drei Raumachsen und die um diese Achsen auftretenden Momente gemessen werden. Hierzu ist es bekannt, die Windkanalwaage gestellfest anzubringen und das Prüfmodell über Stützen mit der Windkanalwaage zu verbinden. Diese als "externe" Windkanalwaagen bezeichneten Windkanalwaagen können beispielsweise als sogenannten Pyramidenwaagen ausgeführt sein (DE-PS 29 26 213). Sie haben allgemein den Vorteil verhältnismäßig hoher Meßgenauigkeit und sind im allgemeinen leicht zu kalibrieren. Die Kraftmeßelemente liegen außerhalb des Windkanaltunnels und sind deshalb den dort herrschenden Temperaturschwankungen nicht ausgesetzt, was von besonderer Bedeutung ist, wenn die Windkanalwaage bei sehr tiefen Temperaturen betrieben wird. Der Nachteil dieser externen Windkanalwaagen liegt aber darin, daß die das Prüfmodell tragenden Stützen den Strömungsverlauf stören und daß die an diesen Stützen durch die Strömung verursachten Kräfte das Meßergebnis beeinflussen.

Diese Nachteile entfallen weitestgehend bei im oder unmittelbar am Prüfmodell angebrachten Mehrkomponenten-Meßeinrichtungen, nachfolgend als "interne" Windkanalwaage bezeichnet. Diese internen Windkanalwaagen sind mit ihrem Befestigungsabschnitt an einem Traggestell des Windkanals angebracht und tragen an ihrem Aufnahmeabschnitt das Prüfmodell. Die von dem Prüfmodell ausgeübten Kräfte und Momente werden von der internen Windkanalwaage erfaßt und einem Auswerterechner zugeleitet.

Eine Schwierigkeit der internen Windkanalwaagen liegt in ihrer Kalibrierung. Diese Kalibrierung ist mit den bisher bekannten Kalibriereinrichtungen äußerst zeitraubend und daher mit hohen Kosten verbunden. Der Hauptgrund dafür liegt in der Erfordernis, daß für jeden Kalibriervorgang die Richtung der Kalibrierkräfte sehr genau vorgegeben und während des Kalibriervorgangs sehr genau nachgeführt werden muß. Bereits geringe Abweichungen in der Richtung der bei der Kalibrierung aufgebrachten Kräfte führen zu erheblichen Fehlern.

Hierbei ist auch zu berücksichtigen, daß sich die an der zu kalibrierenden Windkanalwaage angreifenden Kräfte und Momente gegenseitig beeinflussen und daß gerade für den Betrieb von Windkanälen bei sehr tiefen Temperaturen ein weiter Temperaturbereich bei der Kalibrierung erfaßt werden muß. Diese Schwierigkeiten haben dazu geführt, daß die Kosten für die Kalibrierung von internen Windkanalwaagen mit herkömmlichen Kalibriereinrichtungen höher sein können als die Herstellungskosten der Windkanalwaage selbst. Wegen der großen Anzahl von erforderlichen Messungen läßt sich ein vertretbarer Zeit- und Arbeitsaufwand für die Kalibrierung der internen Windkanalwaage nur durch einen weitgehend automatisierten Arbeitsablauf erreichen, der aber mit herkömmlichen Kalibriereinrichtungen noch nicht durchführbar ist.

Aufgabe der Erfindung ist es daher, eine Kalibriereinrichtung der eingangs genannten Gattung zu schaffen, mit der auch in einem weitgehend automatisierten Arbeitsablauf eine Kalibrierung von internen Windkanalwaagen mit hoher Genauigkeit ermöglicht wird.

Diese Aufgabe wird erfindungsgemäß dadurch gelöst, daß eine Waagenplattform einer Kalibrierwaage mit dem Aufnahmeabschnitt der internen Windkanalwaage verbindbar ist, daß die Waagenplattform an einem Grundgestell der Kalibriereinrichtung über eine Kalibrierte 6-Komponenten-Aufnahmevorrichtung abgestützt ist, die Meßeinrichtungen für in drei zueinander senkrechten Achsen wirkende Kräfte und Für Momente um diese drei Achsen aufweist, und daß die Belastungseinrichtung eine 6-Komponenten-Belastungseinrichtung mit mehreren Kraftantrieben ist, mit der Belastungskräfte in drei zueinander senkrechten Achsen und Momente um diese drei Achsen aufbringbar sind.

Die Kalibrierwaage ist grundsätzlich wie eine externe Windkanalwaage aufgebaut, ebenso wie diese verhältnismäßig einfach und mit hoher Genauigkeit kalibrierbar. Die Belastungseinrichtung bringt in den drei Achsen wirkende Kräfte sowie die um diese Achsen wirkenden Momente am Aufnahmeabschnitt der internen Windkanalwaage in einer vorgegebenen, vorzugsweise durch einen Rechner gesteuerten Reihenfolge auf. Die dabei an der internen Windkanalwaage angreifenden Kräfte und Momente werden einerseits in der Windkanalwaage und andererseits in der Kalibrierwaage gemessen. Durch Vergleiche der jeweiligen Komponenten dieser beiden Messungen werden die Kalibrierdaten gewonnen. Im Gegensatz zu herkömmlichen Kalibriereinrichtungen kommt es hierbei nicht darauf an, daß die durch die Belastungseinrichtung aufgebrachten Kräfte bzw. Momente in ihrer Größe oder ihrer Richtung konstant gehalten werden. Die Auswirkung von Richtungsabweichungen der aufgebrachten Kräfte können in einfacher Weise durch ein Rechnerprogramm erfaßt und korrigiert werden. Die Belastungskräfte können auf beliebige Weise erzeugt werden, beispielsweise hydraulisch, pneumatisch oder über Gewindespindeln. Eine Kraftmessung im Bereich der Belastungseinrichtung ist nicht erforderlich, da die Belastungskräfte in der Kalibrierwaage mit verhältnismäßig großer Genauigkeit gemessen werden.

Gemäß einer bevorzugten Ausführung des Erfindungsgedankens ist vorgesehen, daß die Belastungseinrichtung über eine am Befestigungsabschnitt der Windkanalwaage biegesteif anbringbare axiale Verlängerung mit der Windkanalwaage verbindbar ist. Der Referenzpunkt der Windkanalwaage wird dadurch frei zugänglich. Damit entfällt die Notwendigkeit, Kräfte so angreifen zu lassen, daß ihre Wirkungslinien direkt durch den Referenzpunkt der Windkanalwaage verlaufen. Dies würde voraussetzen, daß eine mit dem Aufnahmeabschnitt der Windkanalwaage verbundene Hülse über die Windkanalwaage gestülpt ist und daß die Kräfte an dieser Hülse angreifen.

Wenn man berücksichtigt, daß ein bevorzugtes Einsatzgebiet derartiger interner Windkanalwaagen, an deren Kalibrierung hohe Anforderungen gestellt werden, Tieftemperatur-Windkanäle sind, so sollte die Möglichkeit gegeben sein, die zu kalibrierende Windkanalwaage in einer Temperaturkammer anzuordnen, um die Kalibrierung auch bei den im Betrieb auftretenden, sehr tiefen Temperaturen durchführen zu können. Diese Anordnung in einer Temperaturkammer wäre aber nur unter großen Schwierigkeiten möglich, wenn mehrere Kraftantriebe der Belastungseinrichtung unmittelbar an der Windkanalwaage angreifen müssen. Beim Kraftangriff an einer mit der Windkanalwaage biegesteif verbundenen axialen Verlängerung kann die Windkanalwaage aber in einer derartigen Temperaturkammer angeordnet sein, die nur vom Befestigungsabschnitt und vom Aufnahmeabschnitt der Windkanalwaage durchbrochen ist.

Weitere vorteilhafte Ausgestaltungen des Erfindungsgedankens sind Gegenstand weiterer abhängiger Patentansprüche.

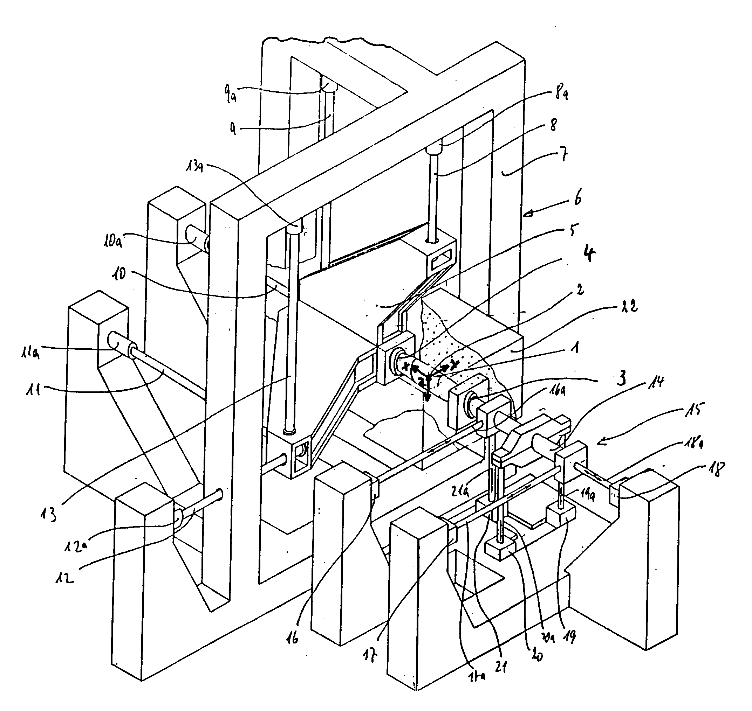

Nachfolgend wird ein Ausführungsbeispiel der Erfindung näher erläutert, das in der Zeichnung dargestellt ist.

Die Zeichnung zeigt in stark vereinfachter, räumlicher Darstellungsweise eine Kalibriereinrichtung für eine darin aufgenommene interne Windkanalwaage 1, die in der Zeichnung nur als Stab oder Hülse dargestellt ist. Die Windkanalwaage 1 trägt an einem vorzugsweise mittleren Meßabschnitt Kraftmeßelemente, die in der Zeichnung nicht näher dargestellt sind, beispielsweise Dehnungsmeßstreifen. Diese Kraftmeßelemente sind in bekannter Weise so angebracht, daß sie Meßsignale zur Erfassung von Kräften in den drei Achsen und von Momenten um diese drei Achsen X, Y und Z ermöglichen. Der Schnittpunkt der an der Windkanalwaage angreifenden Kräfte in den Richtungen der Achsen X, Y und Z wird hier als Referenzpunkt 2 bezeichnet.

Das eine Ende der Windkanalwaage 1 bildet einen Befestigungsabschnitt 3, der zur Befestigung an einem Traggestell des Windkanals bestimmt ist. Das andere Ende der Windkanalwaage 1 bildet einen Aufnahmeabschnitt 4, der im Betrieb der Windkanalwaage zur Anbringung eines Prüfmodells bestimmt ist.

In der Kalibriereinrichtung ist der Aufnahmeabschnitt 4 der Windkanalwaage 1 mit einer Waagenplattform 5 einer Kalibrierwaage 6 verbunden. Die Kalibrierwaage 6 weist ein Grundgestell 7 auf, in dem die Waagenplattform 5 über eine Sechs-Komponenten-Aufnahmevorrichtung aufgehängt bzw. abgestützt ist. Die kalibrierte Sechs-Komponenten-Aufnahmevorrichtung weist sechs Pendelstützen 8 bis 13 auf, die jeweils mit Kraftmeßelementen 8a bis 13a verbunden sind, beispielsweise kalibrierten Kraftmeßdosen.

Eine horizontale Pendelstütze 10 greift in Richtung der Längsachse X der Windkanalwaage 1 an der Waagenplattform 5 an. Eine senkrechte Pendelstütze 8 ist so an einem vorkragenden Abschnitt der Waagenplattform 5 angebracht, daß die Wirkungslinie durch den Referenzpunkt 2 verläuft. In entsprechender Weise ist eine horizontale Pendelstütze 12 so angebracht, daß ihre Wirkungslinie ebenfalls durch den Referenzpunkt 2 verläuft. Die Kraftmeßelemente 8a bzw. 12a dieser Pendelstützen 8 bzw. 12 erfassen somit die Kräfte in Richtung der Achsen Z und Y.

Drei weitere Pendelstützen 9, 11 und 13 sind so angeordnet, daß ihre Wirkungslinien außerhalb des Referenzpunktes 2 verlaufen. Jeweils paarweise bilden zwei Pendelstützen eine Meßeinrichtung zur Momentenbestimmung. So wird ein um die Achse Y wirkendes Moment durch die Kraftmeßeinrichtungen 8a und 9a erfaßt. Ein Moment um die Achse Z wird durch die Kraftmeßeinrichtungen 10a und 11a erfaßt und ein Moment um die Achse X wird durch die Kraftmeßeinrichtung 8a und 13a erfaßt.

Am Befestigungsabschnitt der Windkanalwaage 1 ist eine sich in axialer Richtung erstreckende Verlängerung 14 biegesteif angebracht. An dieser Verlängerung 14 greift eine Belastungseinrichtung 15 an, die zum Aufbringen der Kräfte und Momente dient. Es handelt sich hierbei ebenfalls um sechs Komponenten, nämlich die drei Kräfte in Richtung der Achsen X, Y und Z sowie um die drei Momente um diese Achsen X, Y und Z. Die 6-Komponenten-Belastungseinrichtung 15 weist sechs Kraftantriebe 16 bis 21 auf, die hydraulisch, pneumatisch oder mechanisch angetrieben sein können. Beispielsweise kann es sich dabei um motorisch angetriebene Gewindespindeln handeln. Jeder Kraftantrieb 16 bis 21 ist jeweils über eine Zug- bzw. Druckstange 16a bis 21a mit der Verlängerung 14 verbunden.

Der Kraftantrieb 18 bringt eine in Richtung der Achse X wirkende Axialkraft unmittelbar auf. Die beiden Kraftantriebe 16 und 17, deren Wirkungsrichtungen in einer horizontalen Achsschnittebene liegen, bringen in dieser Ebene ein Kräftepaar auf, durch das sowohl eine am Referenzpunkt 2 angreifende Kraft in Richtung der Achse Y als auch ein Moment um die Achse Z erzeugt werden kann. Die beiden Kraftantriebe 19 und 20 erzeugen ein in einer Normalebene zur Längsachse X liegendes Kräftepaar und somit ein Moment um diese Achse X. Zusammen mit dem weiteren, senkrecht wirkenden Kraftantrieb 21 erzeugen die Kraftantriebe 19 und 20 ein Kräftepaar in einer senkrechten Achsschnittebene, das eine Kraft in Richtung der Achse Z bzw. ein Moment um die Achse Y verursacht.

Auf diese Weise können durch Steuerung der Kraftantriebe 16 bis 21 der Belastungseinrichtung 15 alle erforderlichen Kräfte und Momente in jeder gewünschten Kombination oder einzeln auf den Referenzpunkt 2 der Windkanalwaage 1 ausgeübt werden.

Die Windkanalwaage 1 ist in einer in der Zeichnung nur angedeuteten Temperaturkammer 22 angeordnet, die nur in zwei gegenüberliegenden Wänden für den Befestigungsabschnitt 3 und den Aufnahmeabschnitt 4 der Windkanalwaage 1 durchbrochen ist. In der Temperaturkammer 22 können alle Temperaturen eingestellt werden, bei denen eine Kalibrierung der Windkanalwaage 1 erfolgen soll.

Die jeweils in beiden Richtungen wirkenden Kraftantriebe 16 bis 21 der Belastungseinrichtung 15 sind mit ebenfalls in beiden Richtungen wirksamen Überlasteinrichtungen ausgestattet, um eine Überlastung der Windkanalwaage 1 zu verhindern.

Abweichungen der Kalibrierkräfte vom Idealwert in Größe und Richtung sind zulässig. Diese Abweichungen können durch ein Softwareprogramm rechnerisch korrigiert werden.

**Patentansprüche**

1. Kalibriereinrichtung für eine interne Windkanalwaage (1), die einen Befestigungsabschnitt (3) zur Verbindung mit einem Traggestell des Windkanals, einen Aufnahmeabschnitt (4) zur Anbringung eines Prüfmodells und einen Meßabschnitt aufweist, an dem Kraftmeßelemente für eine Kraft- und Momentenmessung angebracht sind, mit einer an der Windkanalwaage (1) angreifenden Belastungseinrichtung (15), dadurch gekennzeichnet, daß eine Waagenplattform (5) einer Kalibrierwaage mit dem Aufnahmeabschnitt (4) bzw. dem Befestigungsabschnitt (3) der internen Windkanalwaage (1) verbindbar ist, daß die Waagenplattform (5) an einem Grundgestell (7) der Kalibriereinrichtung über eine kalibrierte 6-Komponenten-Aufnahmevorrichtung abgestützt ist, die Meßeinrichtungen (8a bis 13a) für in drei zueinander senkrechten Achsen (X, Y und Z) wirkende Kräfte und für Momente um diese drei Achsen (X, Y und Z) aufweist, und daß die am Befestigungsabschnitt (3) bzw. am Aufnahmeabschnitt (4) der Windkanalwaage (1) angreifende Belastungseinrichtung (15) eine 6-Komponenten-Belastungseinrichtung mit mehreren Kraftantrieben (16 bis 21) ist, mit der Belastungskräfte in drei zueinander senkrechten Achsen (X, Y und Z) und Momente um diese drei Achsen (X, Y und Z) aufbringbar sind.

2. Kalibriereinrichtung nach Anspruch 1, dadurch gekennzeichnet, daß die 6-Komponten-Aufnahmevorrichtung der Kalibrierwaage (6) sechs an der Waagenplattform (5) angreifende, jeweils mit Kraftmeßelementen (8a bis 13a) versehene Pendelstützen (8 bis 13) aufweist und daß sich die Wirkungslinien von drei der Pendelstützen (8, 10, 12) im Referenzpunkt (2) der Windkanalwaage (1) schneiden.

3. Kalibriereinrichtung nach Anspruch 1, dadurch gekennzeichnet, daß die Belastungseinrichtung (15) über eine am Befestigungsabschnitt (3) der Windkanalwaage (1) biegesteif anbringbare axiale Verlängerung (14) mit der Windkanalwaage (1) verbindbar ist.

4. Kalibriereinrichtung nach Anspruch 3, dadurch gekennzeichnet, daß die Belastungseinrichtung (15) Kraftantriebe (16, 17, 19 bis 21) aufweist, mit denen in zwei zueinander senkrechten Achsschnittebenen jeweils ein an der Verlängerung (14) angreifendes Kräftepaar aufbringbar ist.

5. Kalibriereinrichtung nach Anspruch 3, dadurch gekennzeichnet, daß die Belastungseinrichtung (15) Kraftantriebe (19, 20) aufweist, mit denen in einer Normalebene zur Längsachse der Windkanalwaage (1) ein Moment um diese Längsachse (X) aufbringbar ist.

6. Kalibriereinrichtung nach Anspruch 3, dadurch gekennzeichnet, daß die Belastungseinrichtung (15) einen in Richtung der Längsachse (X) der Windkanalwaage (1) wirkenden Kraftantrieb (18) aufweist.

7. Kalibriereinrichtung nach Anspruch 1, dadurch gekennzeichnet, daß die Kraftantriebe (16 bis 21) jeweils mit einer Überlastsicherung ausgestattet sind.

8. Kalibriereinrichtung nach Anspruch 1, dadurch gekennzeichnet, daß eine 6-Komponenten-Überlastungssicherung zwischen der Windkanalwaage (1) und den Kraftantrieben (16 bis 21) bzw. der Verlängerung (14) angeordnet ist.

9. Kalibriereinrichtung nach Anspruch 3, dadurch gekennzeichnet, daß eine temperierbare Temperaturkammer (22) vorgesehen ist, welche die Windkanalwaage (1) umgibt, und welche im wesentlichen nur vom Befestigungsabschnitt (3) und vom Aufnahmeabschnitt (4) durchbrochen ist.

10. Kalibriereinrichtung nach einem der Ansprüche 1-9, dadurch gekennzeichnet, daß die Meßeinrichtungen (8a bis 13a) mit einer elektronischen Recheneinrichtung verbunden sind, welche mittels eines Softwareprogrammes Abweichungen der Kalibrierkräfte vom Idealwert in Größe und Richtung korrigiert.

**Claims**

1. Calibration device for scales internal to a wind-tunnel, that has a mounting section (3) for connection to a support base of the wind-tunnel, a receiver section (4) for the attachment of a test model and a measuring section, to which are attached force measuring elements for measuring force and momentum, with a loading device (15) that engages the wind-tunnel (1), characterised in that a calibration scales weighing platform (5) is attached to the receiver section (4) or the mounting section (3) of the internal wind-tunnel scales (1), that the weighing platform (5) is supported by a base support (7) of the calibration device by way of a calibrated 6-component receiver mechanism, having measuring devices (8a to 13c) for measuring effective forces acting on three mutually perpendicular axes (X, Y and Z), and for measuring moments about these three axes (X, Y and Z), and that the loading device (15) which engages the mounting section (3) or the receiver section (4) of the wind-tunnel (1) is a 6-component loading device with several power drives (16 to 21), to which load forces on three mutually perpendicular axes (X, Y and Z) together and moments about these three axes (X, Y and Z) can be applied.

2. Calibration device in accordance with claim 1, characterised in that the 6-component receiver mechanism of the calibrated scales (6) has six link supports attached to the weighing platform (5) that are each provided with force measuring elements (8a to 13a) and that the lines of application of three of the link supports (8, 10, 12) intersect at the reference point of the wind-tunnel scales.

3. Calibration device in accordance with claim 1, connected to the wind-tunnel scales (1) via an axial extension (14) which is resistant to bending and can be fitted at the mounting section (3) of the wind-tunnel scales (1).

4. Calibration device in accordance with claim 3, characterised in that the loading device (15) has power drives (16, 17, 19 to 21) with which a force couple can be applied to the extension (14) in two mutually perpendicular axial planes.

5. Calibration device in accordance with claim 3, characterised in that the loading device (15) has power drives (19, 20) with which a moment can be applied about the longitudinal axis (X) in a plane normal to the longitudinal axis of the wind-tunnel scales (1).

6. Calibration device in accordance with claim 3, characterised in that the loading device (15) has a power drive (18) effective in the direction of the longitudinal axis (X) of the wind-tunnel scales (1).

7. Calibration device in accordance with claim 1, characterised in that the power drives (16 to 21) are each fitted with an overload mechanism.

8. Calibration device in accordance with claim 1, characterised in that a 6-component overload safety-mechanism is disposed between the wind-tunnel scales and the power drives (16 to 21) or the extension (14).

9. Calibration device in accordance with claim 3, characterised in that a heatable temperature chamber (12) is provided, that surrounds the wind-tunnel scales (1), and that in essence is only pierced by the mounting section (3) and by the receiver section (4).

10. Calibration device in accordance with claims 1 to 9, characterised in that the measuring device (8a to 13a) is connected to an electronic computing device that corrects divergences of magnitude and direction of the calibrated force from standardised values by way of a software program.

**Revendications**

1. Dispositif de calibrage pour une balance interne de soufflerie (1) qui comporte une section de fixation (3) pour la liaison avec un bâti porteur de la soufflerie, une section de logement (4) pour le placement d'une maquette et une section de mesure à laquelle sont appliqués des éléments dynamométriques pour une mesure des forces et de couples, comportant un dispositif d'application de charges (15) agissant sur la balance (1) de la soufflerie, caractérisé en ce qu'une plate-forme (5) d'une balance de calibrage peur être reliée à la section de logement (4) ou à la section de fixation (3) de la balance interne de soufflerie (1), en ce que la plate-forme de balance (5) s'appuie sur un bâti de base (7) du dispositif de calibrage par l'intermédiaire d'un dispositif de captage à 6 composantes calibré, qui comporte des dispositifs de mesure (8a à 13a) pour des forces agissant suivant trois axes perpendiculaires entre eux (X, Y et Z), et pour des couples agissant autour de ces trois axes (Y, et Z), et en ce que le dispositif d'application de charges agissant sur la section de fixation (3) ou à la section de réception (4) de la balance de soufflerie (1) est un dispositif d'application de charges à 6 composantes comportant plusieurs applicateurs de forces (16 à 21), avec lequel des forces de charge peuvent être appliquées suivant trois axes perpendiculaires entre eux (X, et Z) et des couples autour de ces trois axes (X, Y et Z).

2. Dispositif de calibrage selon la revendication 1, caractérisé en ce que le dispositif de captage à 6 composants de la balance de calibrage (6) comporte six appuis pendulaires (8 à 13) agissant sur la plate-forme de balance (5), comportant chacun des éléments dynamométriques (8a à 13a), et en ce que les lignes d'action de trois des appuis pendulaires (8, 10, 12) se coupent au point de référence (2) de la balance de soufflerie (1).

3. Dispositif de calibrage selon la revendication 1, caractérisé en ce que le dispositif d'application de charges (15) peut être relié à la balance de soufflerie (1) au moyen d'un prolongement axial (14) pouvant être appliqué avec rigidité à la flexion à la section de fixation (3) de la balance de soufflerie (1).

4. Dispositif de calibrage selon la revendication 3, caractérisé en ce que le dispositif d'application de charges (15) comporte des applicateurs de forces (16, 17, 19 à 21) avec lesquels peuvent être appliqués, dans chacun de deux plans de coupe axiaux perpendiculaire entre eux deux forces agissant sur le prolongement (14).

5. Dispositif de calibrage selon la revendication 3, caractérisé en ce que le dispositif d'application de charges (15) comporte des moyens d'entraînement (19, 20) avec lesquels un couple peut être appliqué dans un plan normal à l'axe longitudinal de la balance de soufflerie (1) autour de cet axe longitudinal (X).

6. Dispositif de calibrage selon la revendication 3, caractérisé en ce que le dispositif d'application de charges (15) comporte des moyens d'entraînement (18) agissant dans la direction de l'axe longitudinal (X) de la balance de soufflerie (1).

7. Dispositif de calibrage selon la revendication 1, caractérisé en ce que les moyens d'entraînement (16 à 21) comportent chacun un dispositif de sécurité contre les surcharges.

8. Dispositif de calibrage selon la revendication 1, caractérisé en ce qu'un dispositif de sécurité contre les surcharges à 6 composantes est placé entre la balance de soufflerie (1) et les moyens d'entraînement ou le prolongement (14).

9. Dispositif de calibrage selon la revendication 3, caractérisé en ce qu'il est prévu une chambre à équilibrage de température (22) qui entoure la balance de soufflerie (1) et qui n'est pratiquement interrompue que par la section de fixation (3) et la section de réception (4).

10. Dispositif de calibrage selon l'une des revendications 1 à 9, caractérisé en ce que les dispositifs de mesure (8a à 13a) sont reliés à un dispositif de calcul électronique qui, au moyen d'un programme de logiciel, corrige des écarts en grandeur et direction des forces de calibrage par rapport à la valeur idéale.